# FASCICULE DE BREVET EUROPEEN

(11) **EP 0 974 761 B1**
(45) Date de publication et mention de la délivrance du brevet: **07.07.2004**
(21) Numéro de dépôt: 99401734.1
(22) Date de dépôt: 09.07.1999
(51) Int. Cl.: F16C 11/12

(54) **Pivot flexible a axe interieur de pivotement**
Flexibles Gelenk mit Innendrehachse
Flexible pivot with internal swinging axis

(30) Priorité: 20.07.1998 FR 9809219
(43) Date de publication de la demande: 26.01.2000
(73) Titulaire: CSEM Centre Suisse d'Electronique et de Microtechnique SA -Recherche et Développement, 2007 Neuchâtel (CH)
(72) Inventeur: Genequand, Pierre-Marcel, 1209 Geneve (CH); Schwab, Philippe, 1421 Grandvent (CH)
(74) Mandataire: Colas, Jean-Pierre

(56) Documents cités:
- DE-A- 19 610 692
- FR-A- 2 666 630
- FR-A- 2 703 415
- GB-A- 2 178 851
- US-A- 4 499 778
- US-A- 5 529 277

## Description

La présente invention concerne un pivot flexible à axe intérieur de pivotement. Elle concerne également un assemblage d'une pluralité de tels pivots.

On entend par pivots flexibles à axe intérieur de pivotement les pivots centrés, correspondant aux pivots cinématiques à axe de pivotement réel, situé à l'intérieur de la structure, par opposition aux pivots excentrés, correspondant aux pivots cinématiques à axe de pivotement virtuel, situé à l'extérieur de la structure, éventuellement à l'infini, le mouvement se réduisant alors au mouvement de translation.

On connaît de l'état de la technique un pivot flexible à axe intérieur de pivotement, dit pivot à lames croisées, du fait que le mouvement de pivotement est réalisé par des éléments flexibles en forme de lame, disposés dans des plans orthogonaux. Toutefois, ce type de pivot centré est asymétrique, ce qui complique sa réalisation et pose des problèmes d'hyperstaticité interne. Un autre inconvénient réside dans la structure des lames rapportées.

Un deuxième pivot centré connu est constitué d'une pluralité de lames s'étendant radialement à partir de l'axe de pivotement, un premier ensemble de lames étant fixé tandis qu'un deuxième ensemble est lié à l'objet mobile en pivotement. Bien que monolithique et sans soudure, cet autre type de pivot centré connu présente cependant une structure qui reste asymétrique avec toutes ses conséquences négatives sur la charge et l'encombrement. D'autre part, le centre du pivot est complètement occupé par de la matière, ce qui peut être un inconvénient, par exemple, pour le passage d'un faisceau optique.

Aussi, le problème technique à résoudre par l'objet de la présente invention est de proposer un pivot flexible à axe intérieur de pivotement qui serait de structure monolithique, sans soudure ni assemblage interne, laissant libre le passage central, et qui présenterait une stabilité maximale aux efforts de charge pour un encombrement minimum.

La solution au problème technique posé consiste, selon la présente invention, en ce que le pivot comporte deux étages symétriques par rapport à un plan médian perpendiculaire à l'axe de pivotement, et séparés par une fente circulaire externe contenant le plan médian, chaque étage comprenant une interface annulaire reliée à un cylindre intermédiaire commun, d'axe confondu avec l'axe intérieur de pivotement par une pluralité de bras de guidage flexibles radiaux.

Ainsi, la structure du pivot flexible conforme à l'invention est monolithique, symétrique par principe, stable et de faible encombrement. De plus, la partie centrale du pivot, constituée par l'intérieur du cylindre intermédiaire, est libre et permet notamment le passage d'un faisceau optique dans une application du pivot flexible de l'invention à un télescope.

La course en rotation du pivot flexible, objet de l'invention, est limitée à quelques degrés. On observe qu'avantageusement, le décentrement reste nul pendant la rotation.

De manière à augmenter la course en rotation du pivot, l'invention prévoit que le cylindre intermédiaire est flexible radialement. Cette disposition permet en effet de maintenir constante sur une plus grande course la distance entre l'axe intérieur de pivotement et l'interface annulaire, par déformation radiale du cylindre intermédiaire.

Selon un mode de réalisation particulier de l'invention, la flexibilité radiale recherchée est obtenue du fait que le cylindre intermédiaire présente des ondulations annulaires.

Il est également possible d'augmenter la course en rotation du pivot flexible conforme à l'invention en assemblant plusieurs pivots de façon à additionner les courses intermédiaires de chaque pivot. A cet effet, l'invention propose deux types d'assemblage.

Selon un premier mode de réalisation, l'assemblage est obtenu par empilement des pivots flexibles, une interface annulaire d'un pivot étant fixée à l'interface annulaire contiguë d'un pivot voisin.

Selon un deuxième mode de réalisation, l'assemblage est obtenu par empilement monolithique des pivots flexibles, une interface annulaire d'un pivot formant pièce unique avec l'interface annulaire contiguë d'un pivot voisin, tandis que les bras de guidage et le cylindre intermédiaire d'un pivot sont séparés des bras de guidage et du cylindre intermédiaire contigus d'un pivot voisin par une fente circulaire interne.

La description qui va suivre en regard des dessins annexés, donnés à titre d'exemples non limitatifs, fera bien comprendre en quoi consiste l'invention et comment elle peut être réalisée.

La figure 1a est une vue en perspective du pivot flexible conforme à l'invention.

La figure 1b est une vue de dessus du pivot flexible de la figure 1a.

La figure 1c est une vue de côté en coupe selon la ligne A-A du pivot flexible de la figure 1b tel que modifié pour réaliser le pivot de la figure 4.

La figure 2 est une vue de dessus en coupe selon la ligne B-B d'un bras de guidage du pivot flexible de la figure 1c.

La figure 3 est une vue partielle de dessus d'une variante de réalisation du pivot flexible conforme à l'invention.

La figure 4 est une vue de côté en coupe d'un premier assemblage de pivots flexibles conformes à l'invention.

La figure 5 est une vue de côté en coupe d'un deuxième assemblage de pivots flexibles conformes à l'invention.

La figure 6 est une vue partielle de dessus d'un pivot flexible de l'invention montrant un premier mode de motorisation intégrée.

La figure 7 est une vue de dessus d'un pivot flexible de l'invention montrant un deuxième mode de motorisation intégrée.

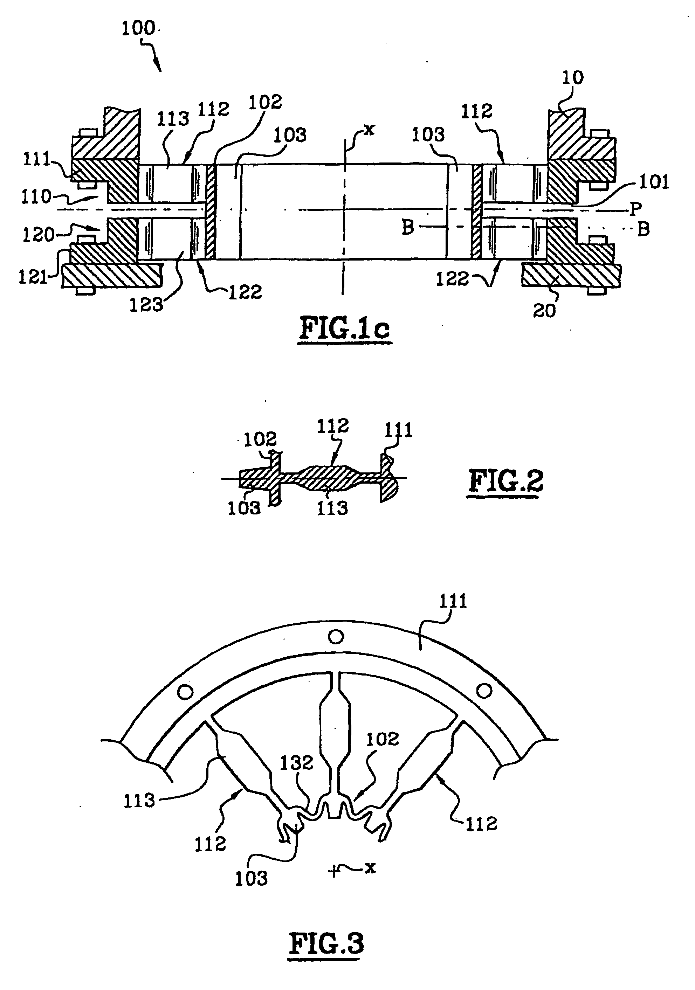

Sur la figure la est représenté en perspective un pivot flexible 100 à axe intérieur X de pivotement comportant deux étages 110, 120 symétriques par rapport à un plan médian P perpendiculaire à l'axe intérieur X de pivotement, comme le montre plus particulièrement la figure 1c.

Les étages 110, 120 symétriques sont séparés par une fente 101 circulaire externe contenant le plan médian P. Chaque étage 110, 120 comprend une interface 111, 121 annulaire reliée à un cylindre 102 intermédiaire commun d'axe confondu avec l'axe intérieur X de pivotement par une pluralité de bras 112, 122 de guidage radiaux, flexibles pour la rotation autour de l'axe X mais rigides pour tous les autres degrés de liberté.

Le pivot flexible de l'invention est donc complètement monolithique et peut être réalisé de multiples façons : tournage, fraisage, électroérosion à fil ou injection, sans nécessité d'assemblage interne.

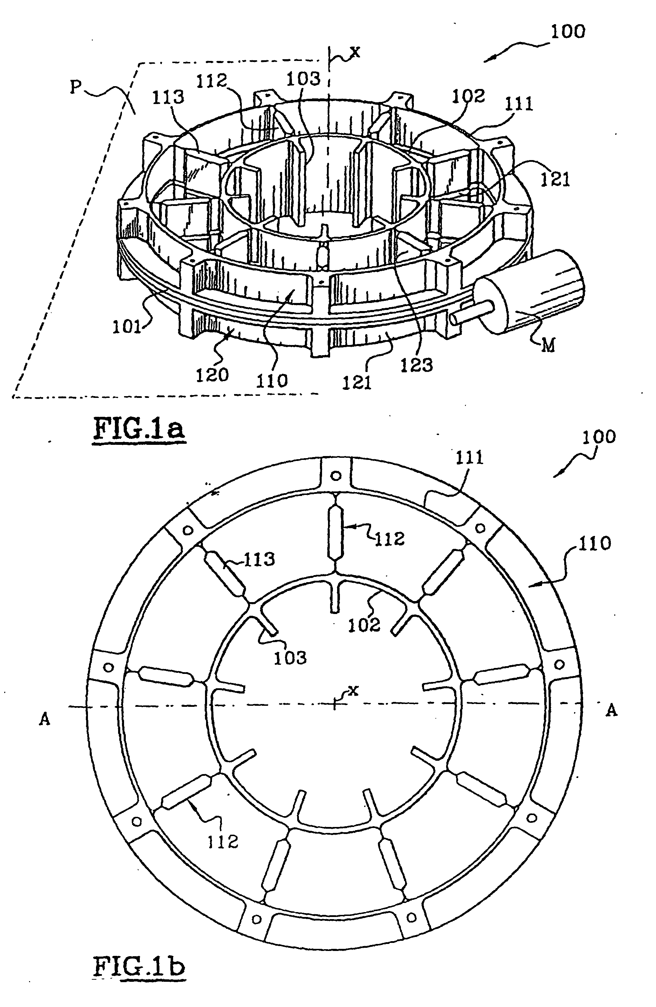

Le fonctionnement du pivot flexible des figures 1a à 1c est le suivant. L'étage inférieur 120 est par exemple installé sur une base fixe 20 par l'interface 121 annulaire tandis que l'interface 111 annulaire de l'étage supérieur 110 reçoit une plate-forme mobile 10 destinée à pivoter par rapport à la base fixe 20. Un moyen de motorisation schématiquement représenté par le moteur M de la figure la entraîne en rotation l'interface 111, laquelle peut alors pivoter du fait de la flexibilité des bras 112 de guidage radiaux.

Les bras 112, 122 de guidage radiaux peuvent être simplement formés de lames flexibles de plan passant par l'axe intérieur X de pivotement. Cependant, ainsi que l'indiquent les figures la, 1b, 1c et 2, il y a avantage à ce que les lames présentent une zone 113, 123 de rigidification en partie centrale, ces zones de rigidification étant obtenues notamment par électroérosion à fil.

On peut observer sur les figures 1a, 1b, 1c et 2 la présence d'un renfort axial 103 reliant rigidement, du côté du cylindre 102 intermédiaire, chaque bras 112 de guidage d'un étage 110 à un bras 122 de guidage d'un autre étage 120, le renfort axial 103 ayant pour fonction de réaliser une liaison rigide entre les bras de guidage des deux étages 110, 120.

La course maximale en rotation du pivot flexible 100 conforme à l'invention est limitée à quelques degrés. Toutefois, elle pourrait être sensiblement augmentée en diminuant le diamètre du cylindre 102 intermédiaire par rapport à celui des interfaces 111, 121 annulaires. A cet effet, on prévoit que le cylindre 102 intermédiaire est flexible radialement. Plus spécialement, cette flexibilité radiale est obtenue du fait que le cylindre 102 intermédiaire présente des ondulations annulaires 132, du reste compatibles avec un usinage par électroérosion à fil. (figure 3)

Une autre façon d'augmenter la course en rotation du pivot flexible 100, objet de l'invention, est de réaliser des assemblages par empilement.

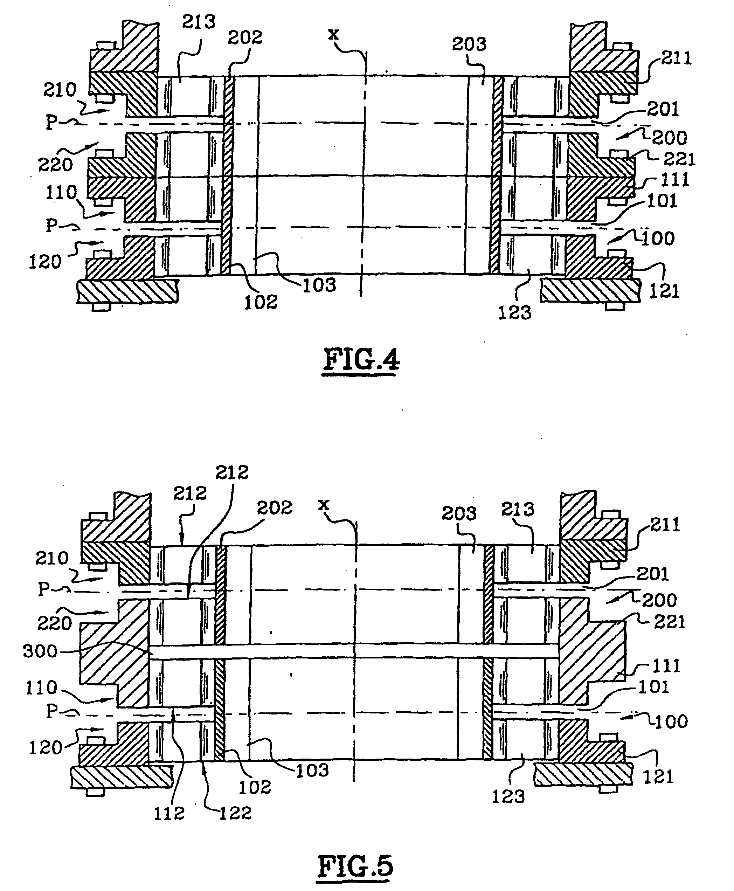

Un premier type d'empilement est montré à la figure 4, dans lequel, hormis les interfaces 121, 211 annulaires extrêmes, une interface 111 annulaire d'un pivot flexible 100 est fixée à l'interface 221 annulaire contiguë d'un pivot voisin 200. Cette structure, bien que non monolithique a l'avantage d'être modulaire. Le premier type d'empilement correspond à empiler plusieurs pivots flexibles réalisés selon celui de la figure 1c de manière à permettre leur fixation l'un à l'autre.

Le deuxième type d'empilement illustré à la figure 5, consiste en un empilement monolithique de deux pivots flexibles 100, 200 identiques, une interface 111 annulaire d'un pivot 100 formant pièce unique avec l'interface 221 annulaire contiguë d'un pivot voisin 200, tandis que les bras 112 de guidage et le cylindre 102 intermédiaire d'un pivot 100 sont séparés des bras 222 de guidage et du cylindre 202 intermédiaire contiguë d'un pivot voisin 200 par une fente 300 circulaire interne.

Notons que cette structure monolithique d'empilement de deux pivots est modulaire et peut à son tour faire l'objet d'un empilement.

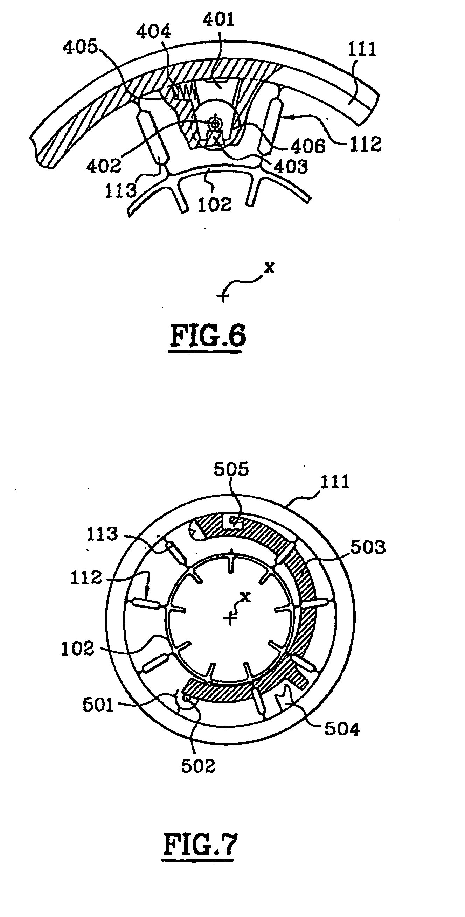

Enfin, ainsi que le montrent les figures 6 et 7, le pivot flexible conforme à l'invention présente l'avantage de pouvoir intégrer à l'intérieur de la structure des organes de motorisation.

Le type de motorisation représenté sur la figure 6 comprend un moteur-réducteur 401 muni d'un pignon axial 402 lequel engrène avec un secteur denté 403 solidaire de l'interface 111 annulaire par deux longerons 405, 406. Un ressort 404 de précontrainte assure le rattrapage de jeu. La base du moteur-réducteur 401 est solidaire de l'interface annulaire 121 (non représentée).

Le deuxième type de motorisation montré à la figure 7 est plus particulièrement destiné à obtenir une haute résolution dans le mouvement de pivotement. Un moteur-réducteur 501 fixé par rapport à une interface 121 annulaire (non représentée) est muni d'un pignon 502 engrenant avec une première extrémité d'un levier 503 de réduction glissé dans la fente 101 circulaire externe. A une autre extrémité, le levier 503 de réduction entraîne une pièce 505 de raccordement à l'interface 111 annulaire mobile. Egalement, un ressort 504 de précontrainte assure le rattrapage de jeu.

## Revendications

1. Pivot flexible (100) à axe intérieur (X) de pivotement, comportant deux étages (110, 120) symétriques par rapport à un plan médian (P) perpendiculaire audit axe (X) de pivotement, et séparés par une fente (101) circulaire externe contenant ledit plan médian (P), chaque étage (110, 120) comprenant une interface (111, 121) annulaire reliée à un cylindre (102) intermédiaire commun, d'axe confondu avec l'axe intérieur (X) de pivotement par une pluralité de bras (112, 122) de guidage flexibles radiaux.

2. Pivot flexible selon la revendication 1, **caractérisé en ce que** chaque bras (112, 122) de guidage flexible radial est formé d'une lame de plan passant par l'axe intérieur (X) de pivotement.

3. Pivot flexible selon la revendication 2, **caractérisé en ce que** ladite lame présente une zone (113, 123) de rigidification en partie centrale.

4. Pivot flexible selon l'une quelconque des revendications 1 à 3, **caractérisé en ce que** chaque bras (112) de guidage d'un étage (110) est relié rigidement à un bras (122) de guidage d'un autre étage (120) par un renfort axial (103), du côté du cylindre (102) intermédiaire.

5. Pivot flexible selon l'une quelconque des revendications 1 à 4, **caractérisé en ce que** ledit cylindre (102) intermédiaire est flexible radialement.

6. Pivot flexible selon la revendication 5, **caractérisé en ce que** le cylindre (102) intermédiaire présente des ondulations annulaires (132).

7. Pivot flexible selon l'une quelconque des revendications 1 à 6, **caractérisé en ce qu'**il comprend des organes de motorisation intégrés.

8. Assemblage de pivots flexibles **caractérisé en ce que** ledit assemblage est obtenu par empilement desdits pivots flexibles (100, 200) selon l'une quelconque des revendications 1 à 7, une interface (111) annulaire d'un pivot (100) étant fixée à l'interface (221) annulaire contiguë d'un pivot voisin (200).

9. Assemblage de pivots flexibles **caractérisé en ce que** ledit assemblage est obtenu par empilement monolithique de deux pivots flexibles (100, 200) selon l'une quelconque des revendications 1 à 7, une interface (111) annulaire d'un pivot (100) formant pièce unique avec l'interface (221) annulaire contiguë d'un pivot voisin (200), tandis que les bras (112) de guidage et le cylindre (102) intermédiaire d'un pivot (100) sont séparés des bras (222) de guidage et du cylindre (202) intermédiaire contigus d'un pivot voisin (200) par une fente (300) circulaire interne.

## Patentansprüche

1. Flexibles Gelenk (100) mit innerer Drehachse (X), das zwei Stufen (110, 120) aufweist, die bezüglich einer mittleren Ebene (P) senkrecht zu der Drehachse (X) symmetrisch sind und durch einen die mittlere Ebene (P) enthaltenden äußeren kreisförmigen Schlitz (101) getrennt sind, wobei jede Stufe (110, 120) eine ringförmige Übergangsfläche (111, 121) aufweist, die mit einem gemeinsamen zwischenliegenden Zylinder (102), dessen Achse mit der inneren Drehachse (X) zusammenfällt, durch mehrere radiale flexible Führungsarme (112, 122) verbunden ist.

2. Flexibles Gelenk nach Anspruch 1, **dadurch gekennzeichnet, dass** jeder radiale flexible Führungsarm (112, 122) aus einer Klinge gebildet ist, deren Ebene durch die innere Drehachse (X) verläuft.

3. Flexibles Gelenk nach Anspruch 2, **dadurch gekennzeichnet, dass** die Lamelle einen Versteifungsbereich (113, 123) in einem zentralen Teil hat.

4. Flexibles Gelenk nach einem der Ansprüche 1 bis 3, **dadurch gekennzeichnet, dass** jeder Führungsarm (112) einer Stufe (110) fest mit einem Führungsarm (122) einer anderen Stufe (120) durch eine axiale Verstärkung (103) seitlich von dem zwischenliegenden Zylinder (102) verbunden ist.

5. Flexibles Gelenk nach einem der Ansprüche 1 bis 4, **dadurch gekennzeichnet, dass** der zwischenliegende Zylinder (102) radial flexibel ist.

6. Flexibles Gelenk nach Anspruch 5, **dadurch gekennzeichnet, dass** der zwischenliegende Zylinder (102) ringförmige Wellungen (132) aufweist.

7. Flexibles Gelenk nach einem der Ansprüche 1 bis 6, **dadurch gekennzeichnet, dass** es integrierte Motorisierungsglieder aufweist.

8. Anordnung aus flexiblen Gelenken, **dadurch gekennzeichnet, dass** die Anordnung durch eine Stapelung der flexiblen Gelenke (100, 200) nach einem der Ansprüche 1 bis 7 erhalten wird, wobei eine ringförmige Übergangsfläche (111) eines Gelenkes (100) an der angrenzenden ringförmigen Übergangsfläche (221) eines benachbarten Gelenkes (200) befestigt ist.

9. Anordnung aus flexiblen Gelenken, **dadurch gekennzeichnet, dass** die Anordnung durch monolithische Stapelung zweier flexibler Gelenke (100, 200) nach einem der Ansprüche 1 bis 7 erhalten wird, wobei eine ringförmige Übergangsfläche (111) eines Gelenkes (100) einstückig mit der angrenzenden ringförmigen Übergangsfläche (221) eines benachbarten Gelenkes (200) ausgebildet ist, während die Führungsarme (112) und der zwischenliegende Zylinder (102) eines Gelenkes von den angrenzenden Führungsarmen (222) und dem angrenzenden zwischenliegenden Zylinder (202) eines benachbarten Gelenkes (200) durch einen inneren kreisförmigen Schlitz (300) getrennt sind.

## Claims

1. A flexible pivot (100) having an interior pivot axis (X) and comprising two stages (110, 120) symmetrical with respect to a median plane (P) perpendicular to said pivot axis (X) and separated by an external circular slot (101) containing said median plane (P), wherein each stage (110, 120) comprises an annular interface (111, 121) connected to a common intermediate cylinder (102) whose axis coincides with the interior pivot axis (X) by a plurality of flexible radial guide arms (112, 122).

2. A flexible pivot according to claim 1, **characterized in that** each flexible radial guide arm (112, 122) is a blade lying in a plane passing through the interior pivot axis (X).

3. A flexible pivot according to claim 2, **characterized in that** a central portion of said blade comprises a stiffener region (113, 123).

4. A flexible pivot according to any of claims 1 to 3, **characterized in that** each guide arm (112) of one stage (110) is rigidly connected to a guide arm (122) of another stage (120) on the side of the intermediate cylinder (102) by an axial stiffener (103).

5. A flexible pivot according to any of claims 1 to 4, **characterized in that** said intermediate cylinder (102) is radially flexible.

6. A flexible pivot according to claim 5, **characterized in that** the intermediate cylinder (102) comprises annular undulations (132).

7. A flexible pivot according to any of claims 1 to 6, **characterized in that** it comprises integrated drive means.

8. An assembly of flexible pivots **characterized in that** said assembly is obtained by stacking flexible pivots (100, 200) according to any of claims 1 to 7 with an annular interface (111) of one pivot (100) fixed to the contiguous annular interface (221) of an adjacent pivot (200).

9. An assembly of flexible pivots **characterized in that** it is obtained by monolithic stacking of two flexible pivots (100, 200) according to any of claims 1 to 7 with an annular interface (111) of one pivot (100) in one piece with the contiguous annular interface (221) of an adjacent pivot (200) and the guide arms (112) and the intermediate cylinder (102) of one pivot (100) separated from the contiguous guide arms (222) and the contiguous intermediate cylinder (202) of an adjacent pivot (200) by a circular internal slot (300).
